# EUROPEAN PATENT APPLICATION

(11) **EP 1 293 122 A1**
(43) Date of publication of application: **19.03.2003**
(21) Application number: 02020143.0
(22) Date of filing: 09.09.2002
(51) Int. Cl.: A01N 25/02, A01N 51/00, A01N 43/90, A01N 57/14, A01N 43/84, A01N 37/40, A01N 43/78, A01N 43/653

(54) **A plant protection product, in particular for injections in arboreal plants, and the relative process**

(30) Priority: 14.09.2001 IT PR20010061
(71) Applicant: Corradi, Bruno, I-43036 Fidenza (PARMA) (IT)
(72) Inventor: Corradi, Bruno, I-43036 Fidenza (PARMA) (IT)
(74) Representative: Gotra, Stefano

(57) **Abstract**

The plant protection product, in particular for injection in arboreal plants, which is the subject of the present invention is originally a solution basically consisting of at least a first plant protection product dissolved in a first organic solvent. In particular, the first plant protection substance is an insecticide, fungicide or antiseptic and the organic solvent is 95° ethanol. In the preferred embodiments, a second plant protection substance can be dissolved in the above-mentioned solution, specifically a fungicide, insecticide or antiseptic, depending on the first substance which was mixed with the organic solvent. The process for the production of the plant protection substance for injection in arboreal plants involves the production of an injectable solution by adding and mixing in succession 95° ethanol, at least one insecticide and at least one fungicide.

## Description

The present invention relates to a plant protection product, in particular for injections in arboreal plants, and a process for obtaining it.

As is known, arboreal plants are treated using various types of chemical products, typically plant protection substances, fertilisers or similar products, each of which has a specific function.

These compounds are normally applied by means of spraying, or by direct absorption through the plant roots. However, both of these methods are possible sources of pollution for other plants and/or persons present in the area in which the treatment takes place.

To overcome this disadvantage, there are known plant treatment methods which involve the pressurised injection of medicinal products directly into the plant's lymphatic system. At present, the plant protection substances used to treat plants are mixtures which basically consist of insecticides and/or fungicides, and/or antiseptics, such as Vertimec ®, Domarc, Meritgreen ®, Oikos, Dursban ®, Tecto, Basf-Mehltaumittel and/or salicylic acid, mixed with water to form emulsions or suspensions.

Although they effectively protect plants from insects, fungi, bacteria, viruses and parasites, these plant protection substances have some disadvantages.

Firstly, most of the plant protection substances currently on sale, and in particular the plant protection substances listed above, are not water-soluble or are only partially soluble in large volumes of water, typically forming emulsions or suspensions. For this reason, curative or preventive treatments which involve the use of such substances with water as the carrier are carried out by spraying. In fact, pressurised injection of such plant protection substances directly into the plant's lymphatic circulation system using water as the carrier, where possible, would be difficult, requiring large quantities of water to inject small doses of the active ingredient. For example, treatment of a plant with a trunk diameter of around 50 cm would need 15 ml of Meritgreen which, being soluble with a ratio of 5 ml per litre of water, would necessitate around three litres of water. As a result, to inject plant protection substances dissolved in large quantities of water directly into the trunk of a plant, very high pressures are needed, which may, therefore, compromise the integrity of the plant's lymphatic system.

Secondly, any injection of plant protection substances using large amounts of water as the carrier would occupy operators and sophisticated equipment for a considerable period of time and would, therefore, be uneconomical.

Another disadvantage is the fact that, to inject said substances directly into the plant's lymphatic system, many holes would have to be made in the trunk in order to administer the whole large amount of water rapidly enough. Therefore, the injection would be very invasive and even damaging, especially for plants whose trunks have a small diameter.

The aim of the present invention is to overcome the above-mentioned disadvantages by providing a plant protection product, in particular for injections in arboreal plants, which is a concentrated solution without the formation of emulsions or suspensions, which can be rapidly injected directly into the trunk of a plant, particularly ornamental plants used for urban furnishings and/or fruit plants.

Another aim of the present invention is to propose a plant protection product which is easy and economical to produce.

Said aims are fulfilled by the plant protection product, in particular for injection in arboreal plants disclosed, which is characterised as indicated in the claims herein and in particular by the fact that it is a solution basically consisting of at least one plant protection substance dissolved in at least one organic solvent.

This and other characteristics are more clearly described in the description which follows, which relates to the preferred embodiments, without limiting the scope of application of the invention.

The plant protection product, in particular for injection in arboreal plants, disclosed is originally a solution basically consisting of at least a first plant protection substance dissolved in a first organic solvent. In particular, the first plant protection substance is an insecticide or fungicide or antiseptic and the organic solvent is ethanol, preferably 95° ethanol.

In the preferred embodiments presented below, it is possible to dissolve in said solution at least a second plant protection substance, specifically a fungicide and/or insecticide and/or antiseptic, depending on the first substance previously mixed with the organic solvent.

Tests performed with various plant protection products on sale, such as: Vertimec (containing around 1.9% abamectin), Domarc (containing around 4.42% tetraconazole), Meritgreen (containing around 17.8% imidacloprid), Oikos 25 plus (containing around 2.5% azadiractin), Oikos 32 Bio (containing 3% azadiractin), Dursban (containing around 44.6% chlorpyrifos), Tecto (containing around 19.7% thiabendazole), Basf-Mehltaumittel (containing around 40% dodemorph) and salicylic acid on their own or mixed together demonstrated that, when mixed with 95° ethanol in suitable ratios, indicated below, such products produce clear solutions without the formation of emulsions or suspensions.

In particular, excellent results were obtained in terms of the absence of emulsions or suspensions with clear solutions which had the following proportions (solutions prepared for plants with trunk diameters of around 50 cm):
- solution 1: ethanol 60 ml, Oikos 60 ml, Domarc 60 ml;
- solution 2: ethanol 45 ml, Vertimec 15 ml, Domarc 60 ml;
- solution 3: ethanol 45 ml, Meritgreen 15 ml, Domarc 60 ml;
- solution 4: ethanol 60 ml, Meritgreen 15 ml, Tecto 60 ml;
- solution 5: ethanol 60 ml, Dursban 50 ml, Domarc 50 ml.
- solution 6: ethanol 45 ml, Vertimec, 15 ml, Meritgreen 15 ml, Domarc 60 ml;
- solution 7: ethanol 30 ml, Vertimec 15 ml, Meritgreen 15 ml, Tecto 60 ml;
- solution 8: ethanol 40 ml, glucose 30 g, Meritgreen 15 ml, Tecto 60 ml;
- solution 9: ethanol 30 ml, glucose 30 g, Vertimec 15 ml, Tecto 60 ml;
- solution 10: ethanol 200 ml, Oikos 32 Bio 50 ml;
- solution 11: ethanol 100 ml, Oikos 25 plus 50 ml;
- solution 12: ethanol 20 ml; Basf-Mehltaumittel 60 ml.

As regards solutions 8 and 9, the amount of glucose present varies from around 10 to 60 g.

The plant protection substances listed in the first 7 solutions after ethanol, that is to say, Oikos, Vertimec, Meritgreen and Dursban, are insecticides, whilst the last plant protection substances listed in each solution is a fungicide (Domarc, Tecto and Basf-Mehltaumittel). In particular, the quantity of ethanol in solutions 1 to 11 may vary within the following values:
- solution 1: ethanol 50 - 100 ml;
- solution 2: ethanol 30 - 80 ml;
- solution 3: ethanol 30 - 80 ml;
- solution 4: ethanol 30 - 100 ml;
- solution 5: ethanol 30 - 100 ml;
- solution 6: ethanol 20 - 100 ml;
- solution 7: ethanol 10 - 80 ml;
- solution 8: ethanol 15 - 60 ml;
- solution 9: ethanol 15 - 60 ml;
- solution 10: ethanol 100 - 500 ml;
- solution 11: ethanol 50 - 200 ml;
- solution 12: ethanol 5 - 120 ml.

Therefore, at least in solutions 1 to 7, the percentage of 95° ethanol present varies between 18% and 53% of the volume of each solution.

From the above solutions it can be seen that the ratios between the volume of plant protection substances and ethanol are as follows:
- solution 1:
   Domarc;
   Oikos in a volume substantially equal to Domarc;
   95° ethanol in a dose variable between around 0.83 and 1.66 times the volume of Domarc;
- solution 2:
   Domarc;
   Vertimec ® in a dose which is around 0.25 times the volume of Domarc;
   95° ethanol in a dose variable between around 0.5 and 1.33 times the volume of Domarc;
- solution 3:
   Domarc;
   Meritgreen ® in a dose which is around 0.25 times the volume of Domarc;
   95° ethanol in a dose variable between around 0.5 and 1.33 times the volume of Domarc;
- solution 4:
   Tecto;
   Meritgreen ® in a dose which is around 0.25 times the volume of Tecto; and
   95° ethanol in a dose variable between around 0.5 and 1.66 times the volume of Tecto;
- solution 5:
   Domarc;
   Dursban ® in a volume substantially equal to Domarc;
   95° ethanol in a dose variable between around 0.6 and 2 times the volume of Domarc;
- solution 6:
   Domarc;
   Meritgreen ® in a dose which is around 0.25 times the volume of Domarc;
   Vertimec ® in a dose which is around 0.25 times the volume of Domarc; e
   95° ethanol in a dose variable between around 0.33 and 1.66 times the volume of Domarc;
- solution 7:
   Tecto;
   Meritgreen ® in a dose which is around 0.25 times the volume of Tecto;
   Vertimec ® in a dose which is around 0.25 times the volume of Tecto; and
   95° ethanol in a dose variable between around 0.16 and 1.33 times the volume of Tecto. For solutions 8 and 9:
- solution 8:
   Tecto;
   Meritgreen ® in a dose which is around 0.25 times the volume of Tecto;
   glucose in a quantity variable between around 10 and 60 g;
   95° ethanol in a dose variable between around 0.25 and 1 times the volume of Tecto;
- solution 9:
   Tecto;
   Vertimec ® in a dose which is around 0.25 times the volume of Tecto;
   glucose in a quantity variable between around 10 and 60 g;
   95° ethanol in a dose variable between around 0.25 and 1 times the volume of Tecto.

For solutions 10, 11 and 12:
- solution 10:
   Oikos 32 Bio;
   95° ethanol in a dose variable between 2 and 10 times the volume of Oikos 32 Bio.
- solution 11:
   Oikos 25 plus;
   95° ethanol in a dose variable between 1 and 4 times the volume of Oikos 25 plus.
- solution 12:
   Basf-Mehltaumittel;
   95° ethanol in a dose variable between 0.083 and 2 times the volume of Basf-Mehltaumittel.

The first 7 solutions indicated above are mixtures of insecticides and fungicides and are prepared by mixing the plant protection substances with the organic solvent in the precise order in which they appear in each solution and at room temperature and pressure. The function of the organic solvent is to bind with the first plant protection substance put into the mixture, to protect it from chemical attack by the second substance and promote its bond with the latter.

The preparation of solutions 8 and 9 will be described later in this text.

Solutions 10, 11 and 12 are prepared by mixing the plant protection substances and the organic solvent at room temperature and pressure.

A second organic solvent, preferably isopropanol, in a quantity which is not less than 5% of the volume of the ethanol, can also be added to all of the above-mentioned solutions. The presence of a second organic solvent reinforces the protection supplied by the ethanol to the first plant protection substance introduced in the mixture, as well as promoting the bond between the plant protection substances dissolved in the solution.

In this sense, another solution (solution 13) basically consists of:
salicylic acid;
95° ethanol in a dose variable between 2 and 4 times the mass of the salicylic acid;
isopropanol in a dose variable between 1 and 2 times the mass of the salicylic acid.

The salicylic acid is basically an antiseptic, that is to say, it can be used as an antibacterial and/or antiviral substance. However, for some species of plants, it may act as a fungicide. The optimum quantity of the various substances in solution 13 are as follows: 50 g salicylic acid, 100 g 95° ethanol, 50 g isopropanol.

As regards the direct use of the active ingredients in the plant protection substances, the possible suitable solutions are as follows (again with reference to plants whose trunks have a diameter of around 50 cm):
- solution 1: azadiractin 1.5 ml;
   tetraconazole 2.652 ml;
   ethanol 50 - 100 ml;
   isopropanol (if present) 2.5 - 5 ml;
- solution 2: abamectin 0.285 ml
   tetraconazole 2.652 ml;
   ethanol 30 - 80 ml;
   isopropanol (if present) 1.5 - 4 ml;
- solution 3: imidacloprid 2.67 ml;
   tetraconazole 2.652 ml;
   ethanol 30 - 80 ml;
   isopropanol (if present) 1.5 - 4 ml;
- solution 4: imidacloprid 2.67 ml;
   thiabendazole 11.82 ml;
   ethanol 30 - 100 ml;
   isopropanol (if present) 1.5 - 5 ml;
- solution 5: chlorpyrifos 22.3 ml;
   tetraconazole 2.21 ml;
   ethanol 30 - 100 ml;
   isopropanol (if present) 1.5 - 5 ml;
- solution 6: abamectin 0.285 ml;
   imidacloprid 2.67 ml;
   tetraconazole 2.652 ml;
   ethanol 20 - 100 ml;
   isopropanol (if present) 1- 5 ml.
- solution 7: abamectin 0.285 ml;
   imidacloprid 2.67 ml;
   thiabendazole 11.82 ml;
   ethanol 10 - 80 ml;
   isopropanol (if present) 0.5 - 4 ml.
- solution 8: imidacloprid 2.67 ml;
   thiabendazole 11.82 ml;
   ethanol 15 - 60 ml;
   glucose 10 - 60 g;
   isopropanol (if present) 0.75 - 3 ml.
- solution 9: abamectin: 0.285 ml;
   thiabendazole: 11.82 ml;
   ethanol: 15 - 60 ml;
   glucose: 10 - 60 g;
   isopropanol (if present) 0.75 - 3 ml.
- solution 10: azadiractin: 1.5 ml;
   ethanol: 100 - 500 ml.
- solution 11: azadiractin: 1.25 ml;
   ethanol: 50 - 200 ml.
- solution 12: dodemorph 24 ml;
   ethanol: 5 - 120 ml;
- solution 13: salicylic acid: 50 g;
   ethanol: 100 - 200 g;
   isopropanol: 50 - 100 g.

For example, in the case of solution 3, Meritgreen, which contains imidacloprid, is soluble in water in a dose of 5 - 7 ml/l, which would make the preparation of an injectable solution impossible due to the huge volumes involved (around three litres of water).

However, if ethanol is used instead, a maximum total quantity of 155 ml of liquid for injection can be obtained (for a trunk with a diameter of around 50 cm) consisting of 15 ml of Meritgreen plus 60 ml of tetraconazole and 30 - 80 ml of 95° ethanol.

From the solutions indicated above, it is clear that the ratios of the volumes of plant protection substances to ethanol are as follows:
- solution 1:
   azadiractin;
   tetraconazole in a dose equal to around 1.77 times the volume of azadiractin;
   95° ethanol in a dose variable between around 33.33 and 66.66 times the volume of azadiractin.
- solution 2:
   abamectin;
   tetraconazole in a dose equal to around 9.3 times the volume of abamectin;
   95° ethanol in a dose variable between around 105 and 281 times the volume of abamectin.
- solution 3:
   imidacloprid;
   tetraconazole in a volume substantially equal to the imidacloprid;
   95° ethanol in a dose variable between around 11.2 and 30 times the volume of imidacloprid.
- solution 4:
   imidacloprid;
   thiabendazole in a dose equal to around 4.42 times the volume of imidacloprid; 95° ethanol in a dose variable between around 11.2 and 37.45 times the volume of imidacloprid.
- solution 5:
   chlorpyrifos;
   tetraconazole in a dose equal to around 0.09 times the volume of chlorpyrifos; 95° ethanol in a dose variable between around 1.34 and 4.48 times the volume of chlorpyrifos.
- solution 6:
   abamectin;
   imidacloprid in a dose equal to around 9.37 times the volume of abamectin;
   tetraconazole in a dose equal to around 9.31 times the volume of abamectin;
   95° ethanol in a dose variable between around 70 and 351 times the volume of abamectin.
- solution 7:
   abamectin;
   imidacloprid in a dose equal to around 9.37 times the volume of abamectin;
   thiabendazole in a dose equal to around 41.47 times the volume of abamectin;
   95° ethanol in a dose variable between around 35.1 and 281 times the volume of abamectin.

For solutions 8 and 9:
- solution 8:
   imidacloprid;
   thiabendazole in a dose equal to around 4.42 times the volume of imidacloprid;
   95° ethanol in a dose variable between around 5.62 and 22.5 times the volume of imidacloprid;
   glucose in a quantity of between around 10 and 60 g;
- solution 9:
   abamectin;
   thiabendazole in a dose equal to around 41.5 times the volume of abamectin;
   95° ethanol in a dose variable between around 52.6 and 210.5 times the volume of abamectin;
   glucose in a quantity of between around 10 and 60 g.

For solutions 10 and 11:
- solution 10:
   azadiractin;
   95° ethanol in a dose variable between 66.6 and 333.3 times the volume of azadiractin.
- solution 11:
   azadiractin;
   95° ethanol in a dose variable between 40 and 160 times the volume of azadiractin.
- solution 12:
   dodemorph;
   95° ethanol in a dose variable between 0.21 and 5 times the volume of dodemorph.

As regards the isopropanol, as already indicated, it can be added to each of the eleven solutions in a percentage not below 5% of the volume of the 95° ethanol already present in solution.

Finally, for solution 13:
- solution 13:
   salicylic acid;
   95° ethanol in a dose variable between 2 and 4 times the mass of salicylic acid;
   isopropanol in a dose variable between 1 and 2 times the mass of salicylic acid.

Solutions 8 and 9 are prepared in the following steps:
- mixing of glucose with Tecto;
- mixing of ethanol with Meritgreen or Vertimec;
- mixing of the two above-mentioned mixtures in a vacuum.

In particular, the two mixtures are mixed in a vacuum by preferably injecting the first mixture into the second, using a syringe from which the air was previously extracted.

Mixing has to be done in a vacuum to prevent the glucose, which is rich in carbon, from reacting with the air and oxidising.

The present invention has important advantages.

Firstly, a plant protection product made in accordance with the present invention consists of a concentrated and clear solution, without the formation of emulsions or suspensions and, therefore, is easily injected directly into the trunk of a plant, in particular ornamental plants for urban furnishings and/or fruit plants, using special syringes described in the patent applications submitted by the Applicant.

Secondly, being concentrated, such solutions are quickly injected by an operator, using non-invasive, low pressure techniques, significantly cutting operating costs.

Another advantage is the fact that this type of plant protection product is easy and economical to produce.

## Claims

1. A plant protection product, in particular for injections in arboreal plants, **characterised in that** it comprises a solution of at least one plant protection substance dissolved in at least one organic solvent.

2. The plant protection product according to claim 1, **characterised in that** the plant protection substance is an insecticide.

3. The plant protection product according to claim 1, **characterised in that** the plant protection substance is a fungicide.

4. The plant protection product according to claim 1, **characterised in that** the plant protection substance is an antiseptic.

5. The plant protection product according to any of the foregoing claims, **characterised in that** the solution comprises at least one additional plant protection substance consisting of a fungicide and/or insecticide and/or antiseptic.

6. The plant protection product according to claim 1, **characterised in that** the organic solvent is ethanol.

7. The plant protection product according to claim 6, in which the ethanol is 95° ethanol in a percentage variable between 18% and 53% of the volume of the solution.

8. The plant protection product according to claim 1, **characterised in that** the solution comprises an additional organic solvent.

9. The plant protection product according to claim 8, **characterised in that** the additional organic solvent is isopropanol.

10. The plant protection product according to claim 8, **characterised in that** the additional organic solvent is present in the solution in a percentage not below 5% of the volume of the other organic solvent.

11. The plant protection product according to claim 1, **characterised in that** it basically consists of:
Domarc;
Oikos in a volume substantially equal to the Domarc;
and
95° ethanol in a dose variable between 0.83 and 1.66 times the volume of Domarc.

12. The plant protection product according to claim 1, **characterised in that** it basically consists of:
Domarc;
Vertimec ® in a dose equal to 0.25 times the volume of Domarc; and
95° ethanol in a dose variable between 0.5 and 1.33 times the volume of Domarc.

13. The plant protection product according to claim 1, **characterised in that** it basically consists of:
Domarc;
Meritgreen ® in a dose equal to 0.25 times the volume of Domarc; and
95° ethanol in a dose variable between 0.5 and 1.33 times the volume of Domarc.

14. The plant protection product according to claim 1, **characterised in that** it basically consists of:
Tecto;
Meritgreen ® in a dose equal to 0.25 times the volume of Tecto; and
95° ethanol in a dose variable between 0.5 and 1.66 times the volume of Tecto.

15. The plant protection product according to claim 1, **characterised in that** it basically consists of:
Domarc;
Dursban ® in a volume substantially equal to the Domarc; and
95° ethanol in a dose variable between 0.6 and 2 times the volume of Domarc.

16. The plant protection product according to claim 1, **characterised in that** it basically consists of:
Domarc;
Meritgreen ® in a dose equal to 0.25 times the volume of Domarc;
Vertimec ® in a dose equal to 0.25 times the volume of Domarc; and
95° ethanol in a dose variable between 0.33 and 1.66 times the volume of Domarc.

17. The plant protection product according to claim 1, **characterised in that** it basically consists of:
Tecto;
Meritgreen ® in a dose equal to 0.25 times the volume of Tecto;
Vertimec ® in a dose equal to 0.25 times the volume of Tecto; and
95° ethanol in a dose variable between 0.16 and 1.33 times the volume of Tecto.

18. The plant protection product according to claim 1, **characterised in that** it basically consists of:
Tecto;
Meritgreen ® in a dose equal to 0.25 times the volume of Tecto; glucose in a quantity of between 10 and 60 g; and
95° ethanol in a dose variable between 0.25 and 1 times the volume of Tecto.

19. The plant protection product according to claim 1, **characterised in that** it basically consists of:
Tecto;
Vertimec ® in a dose equal to around 0.25 times the volume of Tecto;
glucose in a quantity of between 10 and 60 g; and
95° ethanol in a dose variable between 0.25 and 1 times the volume of Tecto.

20. The plant protection product according to claim 1, **characterised in that** it basically consists of:
Oikos 32 Bio;
95° ethanol in a dose variable between 2 and 10 times the volume of Oikos 32 Bio.

21. The plant protection product according to claim 1, **characterised in that** it basically consists of:
Oikos 25 plus;
95° ethanol in a dose variable between 1 and 4 times the volume of Oikos 25 plus.

22. The plant protection product according to claim 1, **characterised in that** it basically consists of:
salicylic acid;
95° ethanol in a dose variable between 2 and 4 times the mass of salicylic acid; isopropanol in a dose variable between 1 and 2 times the mass of salicylic acid.

23. The plant protection product according to claim 1, **characterised in that** it basically consists of:
Basf-Mehltaumittel;
95° ethanol in a dose variable between 0.083 and 2 times the volume of Basf-
Mehltaumittel.

24. The plant protection product according to claim 1, **characterised in that** it basically consists of:
azadiractin;
tetraconazole in a dose equal to 1.77 times the volume of azadiractin; and
95° ethanol in a dose variable between 33.33 and 66.66 times the volume of azadiractin.

25. The plant protection product according to claim 1, **characterised in that** it basically consists of:
abamectin;
tetraconazole in a dose equal to 9.3 times the volume of abamectin; and
95° ethanol in a dose variable between 105 and 281 times the volume of abamectin.

26. The plant protection product according to claim 1, **characterised in that** it basically consists of:
imidacloprid;
tetraconazole in a volume substantially equal to the imidacloprid; and
95° ethanol in a dose variable between 11.2 and 30 times the volume of imidacloprid.

27. The plant protection product according to claim 1, **characterised in that** it basically consists of:
imidacloprid;
thiabendazole in a dose equal to 4.42 times the volume of imidacloprid; and
95° ethanol in a dose variable between 11.2 and 37.45 times the volume of imidacloprid.

28. The plant protection product according to claim 1, **characterised in that** it basically consists of:
chlorpyrifos;
tetraconazole in a dose equal to 0.09 times the volume of chlorpyrifos; and
95° ethanol in a dose variable between 1.34 and 4.48 times the volume of chlorpyrifos.

29. The plant protection product according to claim 1, **characterised in that** it basically consists of:
abamectin;
imidacloprid in a dose equal to 9.37 times the volume of abamectin;
tetraconazole in a dose equal to 9.31 times the volume of abamectin; and
95° ethanol in a dose variable between 70 and 351 times the volume of abamectin.

30. The plant protection product according to claim 1, **characterised in that** it basically consists of:
abamectin;
imidacloprid in a dose equal to 9.37 times the volume of abamectin;
thiabendazole in a dose equal to 41.47 times the volume of abamectin; and
95° ethanol in a dose variable between 35.1 and 281 times the volume of abamectin.

31. The plant protection product according to claim 1, **characterised in that** it basically consists of:
imidacloprid;
thiabendazole in a dose equal to 4.42 times the volume of imidacloprid;
95° ethanol in a dose variable between 5.62 and 22.5 times the volume of imidacloprid;
glucose in a quantity of between 10 and 60 g.

32. The plant protection product according to claim 1, **characterised in that** it basically consists of:
abamectin;
thiabendazole in a dose equal to 41.5 times the volume of abamectin;
95° ethanol in a dose variable between 52.6 and 210.5 times the volume of abamectin;
glucose in a quantity of between 10 and 60 g.

33. The plant protection product according to claim 1, **characterised in that** it basically consists of:
azadiractin;
95° ethanol in a dose variable between 66.6 and 333.3 times the volume of azadiractin.

34. The plant protection product according to claim 1, **characterised in that** it basically consists of:
azadiractin;
95° ethanol in a dose variable between 40 and 160 times the volume of azadiractin.

35. The plant protection product according to claim 1, **characterised in that** it basically consists of:
dodemorph;
95° ethanol in a dose variable between 0.21 and 5 times the volume of dodemorph.

36. The plant protection product according any of the foregoing claims from 11 to 21 or from 23 to 35, **characterised in that** the solution comprises a quantity of isopropanol not below 5% of the volume of the 95° ethanol.

37. A process for the production of a plant protection product for injection in arboreal plants, **characterised in that** it involves the production of an injectable solution by adding and mixing in succession: 95° ethanol, at least one insecticide and at least one fungicide and/or at least one antiseptic.

38. A process for the production of a plant protection product for injection in arboreal plants, **characterised in that** it involves the following steps:
mixing of glucose with a fungicide to form a first solution;
mixing of 95° ethanol with an insecticide to form a second solution;
mixing of the first solution with the second solution in a vacuum.

39. The process according to claim 38, **characterised in that** the step of mixing in a vacuum is performed by injecting the first solution in the second, using a syringe from which the air was previously extracted.
